# EUROPEAN PATENT APPLICATION

(11) **EP 1 975 658 A2**
(43) Date of publication of application: **01.10.2008**
(21) Application number: 08102579.3
(22) Date of filing: 13.03.2008
(51) Int. Cl.: G02B 6/42

(54) **Optical Module**

(30) Priority: 28.03.2007 JP 2007086103
(71) Applicant: NEC CORPORATION, Tokyo (JP)
(72) Inventor: Kawai, Motoyoshi, Tokyo 108-8001 (JP)
(74) Representative: Betten & Resch

(57) **Abstract**

An optical module (A) includes a circuit board (2) mounted with a light receiving element (1), and a waveguide board (4) in which a waveguide (3) is formed. The circuit board is made of a flexible material, and has transmissivity for light having a wavelength received by the light receiving element. A circuit pattern part (5) is formed on a surface on one side of the circuit board, and the light receiving element is mounted on the circuit pattern part. An optical filter part (7) that transmits the light having the wavelength received by the light receiving element and that reflects light having other wavelengths, is formed on a surface on the other side of the circuit board by depositing a dielectric multilayer film. The waveguide board is connected to the optical filter part. In the light receiving element, a light receiving layer (1a) is disposed at a position outside from a region where the circuit pattern part is formed. An end portion of the waveguide of the waveguide board is optically connected to the light receiving layer of the light receiving element through the optical filter part and the circuit board.

## Description

This application is based upon and claims the benefit of priority from Japanese Patent Application No. 2007-086103 filed on March 28, 2007, the content of which is incorporated by reference.

### BACKGROUND OF THE INVENTION

### 1. Field of the Invention

The present invention relates to an optical module for use in an optical communication system, and particularly relates to an optical module including a circuit board mounted with a light receiving element, and a waveguide board in which a waveguide is formed.

### 2. Description of the Related Art

In recent years, in Fiber To The Home (FTTH) systems typified by GE-PON (Gigabit Ethernet (registered trademark)-Passive Optical Network), G-PON (Gigabit-Passive Optical Network) and the like, speedup of the transfer rate to 1.2 Gbps, 2.4 Gbps and the like is being carried out. Therefore, in the receivers of the light modules at the subscriber sides for use in them, speedup also needs to be carried out by using light receiving elements each having a small light receiving diameter of φ50 um or the like and each having less parasitic capacitance.

Meanwhile, in the optical modules for use in the FTTH system, an optical module in which a silica glass waveguide element and an optical semiconductor element such as LD and PIN-PD are optically connected directly without using a lens is widely used for reduction in cost.

Especially when a light receiving element with a small light receiving diameter is used, the light receiving element needs to be disposed at the position near the silica glass waveguide and a signal light emitted radially from the silica glass waveguide needs to be received before it spreads. In order to realize this, as described in European Conference on Optical Communication (ECOC), Yamauchi, etc, "Novel Optical coupling Technology Using Flexible Printed Circuit Suitable for Planar Lightwave Circuit Triplexer", We 4.2.6, 2006, a light receiving element is mounted on a flexible circuit board, and the circuit board is bonded to the end surface of a silica glass waveguide via an optical filter part, whereby the distance between the silica glass waveguide and the light receiving element is shortened (hereinafter, the art will be called the first

### related art).

Further, Japanese Patent Laid-Open No. 2001-133666 proposes an optical communication module with a light shielding filter which module includes an optical fiber, a light receiving element, a semiconductor laser, and an optical integrating board in which an optical waveguide, that connects output light of the semiconductor laser to the optical fiber and that connects the light from the optical fiber to the light receiving element, is formed and which module uses a plurality of wavelengths to perform two-way communication, characterized in that the light shielding filter which shields light which does not need to be received in the light receiving element is placed by being bonded to a light emission end of the light waveguide with an angle formed between the light emitting direction of the optical waveguide and the normal line raised on the light incidence surface of the light shielding filter, and the light receiving element is placed behind the light shielding filter (hereinafter, the art will be called the second related art).

For reference, Japanese Patent Application No. 2004-171551 filed by the present applicant but not opened to the public proposes an optical waveguide type module having a wiring board, a light receiving element mounted on the front side of the wiring board, and a waveguide board disposed on the back side of the wiring board, in which the wiring board is configured by a base material formed of a flexible material such as a polymer, a surface electric wiring disposed on the front side of the base material and a filter film formed on the back side of the base material (hereinafter, the art will be called the reference art).

In the first related art, the optical filter part which is used is configured by depositing a dielectric multilayer film on the board of glass, polyimide and the like. The board thickness of the optical filter part is 10 to 100 um, and therefore, the board thickness of the optical filter causes the problem of making it difficult to shorten the distance between the light receiving element and the silica glass waveguide.

In the second related art, many high precision assembling process steps are required for production, a wiring step is required for the light receiving element, and an expensive light receiving element carrier and the like are required. Therefore, these problems make assembly difficult, and increase the manufacturing cost.

In the reference art, the light receiving element is mounted on the electric wiring, and therefore, an opening for optically connecting the end portion of the optical waveguide and the light receiving region of the light receiving element needs to be formed in the electric wiring.

### SUMMARY OF THE INVENTION

An exemplary object of the invention is to provide an optical module which is capable of reducing the distance between a light receiving element and a waveguide and which is simple in structure, easy in assembly, compact and low in manufacturing cost.

According to an exemplary aspect of the invention, an optical module includes a circuit board mounted with a light receiving element, and a waveguide board in which a waveguide is formed, the circuit board is made of a flexible material, and includes transmissivity for light having a wavelength received by the light receiving element, a circuit pattern part is formed on a surface on one side of the circuit board, and the light receiving element is mounted on the circuit pattern part, an optical filter part, that transmits the light having the wavelength received by the light receiving element and that reflects light having other wavelengths, is formed on a surface on the other side of the circuit board by depositing a dielectric multilayer film, the waveguide board is connected to the optical filter part, in the light receiving element, a light receiving layer is disposed at a position outside from a region where the circuit pattern part is formed, and an end portion of the waveguide of the waveguide board is optically connected to the light receiving layer of the light receiving element through the optical filter part and the circuit board.

Further, according to another exemplary aspect of the invention, an optical module includes a circuit board mounted with a light receiving element, and a waveguide board in which a waveguide is formed, the circuit board is made of a flexible material, and includes transmissivity for light having a wavelength received by the light receiving element, a circuit pattern part is formed on a surface on one side of the circuit board, and the light receiving element is mounted on the circuit pattern part, an optical filter part, that transmits the light having the wavelength received by the light receiving element and that reflects light having other wavelengths, is formed in a region outside from a region, where the circuit pattern part is formed, and on a surface on the one side of the circuit board by depositing a dielectric multilayer film, the waveguide board is connected to a surface on the other side of the circuit board, in the light receiving element, a light receiving layer is disposed at a position outside from a region where the circuit pattern part is formed, and an end portion of the waveguide of the waveguide board is optically connected to the light receiving layer of the light receiving element through the circuit board and optical filter part.

Further, according to still another exemplary aspect of the invention, an optical module includes a circuit board mounted with a light receiving element, and a waveguide board in which a waveguide is formed, the circuit board is made of a flexible material, and includes transmissivity for light having a wavelength received by the light receiving element, a circuit pattern part is formed on a surface on one side of the circuit board and the light receiving element is mounted on the circuit pattern part, a first optical filter part that transmits the light having the wavelength received by the light receiving element and that reflects light having other wavelengths, is formed in a region outside from a region, where the circuit pattern part is formed, and on a surface on the one side of the circuit board by depositing a dielectric multilayer film, a second optical filter part that transmits the light having the wavelength received by the light receiving element and that reflects light having other wavelengths, is formed on a surface on the other side of the circuit board by depositing a dielectric multilayer film, the waveguide board is connected to the second optical filter part, in the light receiving element, a light receiving layer is disposed at a position outside from a region where the circuit pattern part is formed, and an end portion of the waveguide of the waveguide board is optically connected to the light receiving layer of the light receiving element through the second optical filter part, the circuit board and first optical filter part.

The above and other objects, features and advantages of the present invention will become apparent from the following description with reference to the accompanying drawings which illustrate examples of the present invention.

### BRIEF DESCRIPTION OF THE DRAWINGS

FIG, 1 is a view schematically showing the configuration of an optical module according to a first exemplary embodiment of the present invention;
FIGS. 2A to 2D are views for explaining the manufacturing process of a circuit board;
FIG. 3 is a view schematically showing the configuration of an optical module according to a second exemplary embodiment of the present invention; and
FIG. 4 is a view schematically showing the configuration of an optical module according to a third exemplary embodiment of the present invention.

### DETAILED DESCRIPTION OF THE PREFERRED EMBODIMENTS

### [First exemplary embodiment]

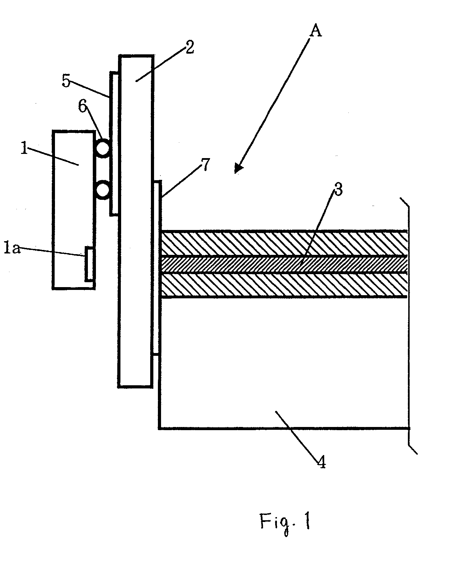

FIG. 1 is a view schematically showing the configuration of an optical module according to a first exemplary embodiment of the present invention.

As shown in FIG. 1, optical module A according to the first exemplary embodiment of the present invention includes circuit board 2 mounted with light receiving element 1, and waveguide board 4 in which waveguide 3 is formed.

Circuit board 2 is made of a flexible raw material such as polyimide, for example, and has transmissivity for light having a wavelength received by light receiving element 1. Circuit board 2 is made of a flexible raw material, and therefore, can facilitate wiring inside the module.

Metal circuit pattern part 5 is formed on the surface on one side of circuit board 2 (left side in FIG. 1), and light receiving element 1 is flip-chip mounted on circuit pattern part 5 by using bump 6.

Optical filter part 7, that transmits light having the wavelength received by light receiving element 1 and that reflects light having other wavelengths, is formed on the surface on the other side of circuit board 2 (right side in FIG. 1) by depositing a dielectric multilayer film.

Waveguide board 4 is, for example, an Si substrate, and waveguide 3 is a silica glass waveguide.

Waveguide board 4 is connected to optical filter part 7 of circuit board 2 with a resin or the like.

In light receiving element 1, light receiving layer (light receiving region) 1a is disposed in a position outside (lower side in FIG. 1) from a region where circuit pattern part 5 is formed.

An end portion of waveguide 3 of waveguide board 4 is optically connected to light receiving layer 1 a of light receiving element 1 through optical filter part 7 and circuit board 2. Specifically, it is disposed so that the optical axis of the core of waveguide 3 corresponds to the center of light receiving layer 1 a of light receiving element 1.

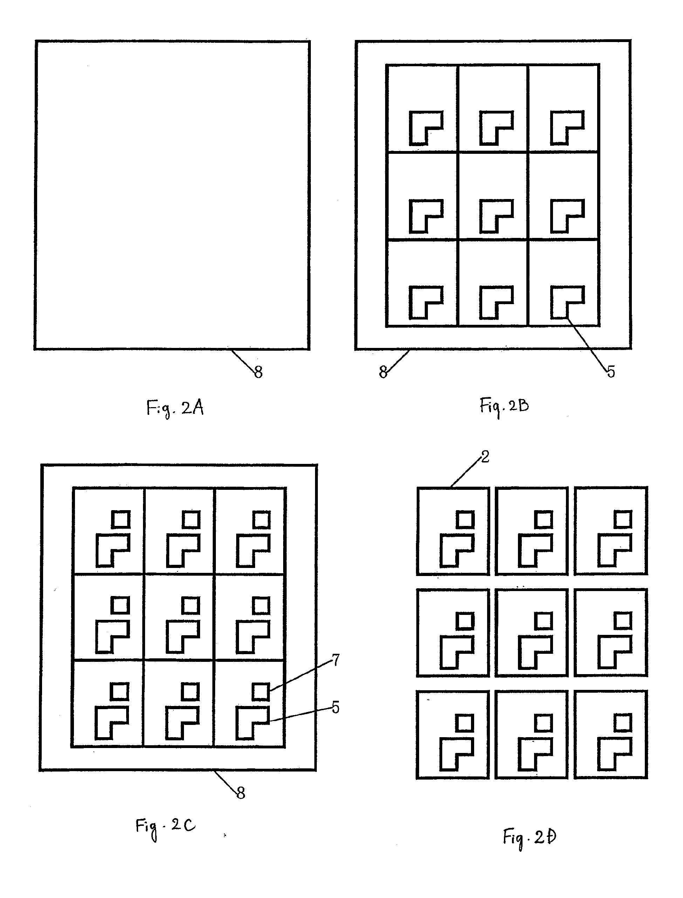

FIGS. 2A to 2D are views for explaining a manufacturing process of circuit board 2.

First, as shown in FIG. 2A, large metallized board 8 is prepared.

Next, as shown in FIG. 2B, board 8 is etched to form circuit pattern part 5.

Next, as shown in FIG. 2C, a dielectric multilayer film is deposited on board 8 to form optical filter part 7.

Thereafter, as shown in FIG. 2D, board 8 is cut into sheets to obtain separated circuit boards 2.

Next, an operation of the optical module according to the exemplary embodiment will be described.

Signal light having a predetermined wavelength is emitted from the end surface of waveguide 3 of waveguide board 4, passes through optical filter part 7, and further passes through circuit board 2. Thereafter, the light is incident on light receiving layer 1a of light receiving element 1 and is converted into an electric signal. The light having wavelengths other than the signal light is reflected by optical filter part 7.

In module A according to the first exemplary embodiment of the present invention, optical filter part 7 is formed by being directly deposited on circuit board 2, and therefore, a board for the optical filter is not required. As a result, the distance between light receiving layer 1a of light receiving element 1 and waveguide 3 can be made shorter by an amount that corresponds to the board thickness of the optical filter.

Further, an optical filter with a board does not need to be separately prepared, the number of components can be reduced, and reduction in size can be achieved.

Assembly process steps that require high precision for manufacture decreases, a wiring process step for light receiving element 1 is not required, and an expensive light receiving element carrier or the like is not required. Therefore, assembly is simplified, and the manufacturing cost can be reduced.

Further, light receiving layer 1 a of light receiving element 1 is disposed at a position outside from the region where circuit pattern part 5 is formed, and therefore, an opening for optically connecting them, as in the reference example, does not need to be formed.

### [Second exemplary embodiment]

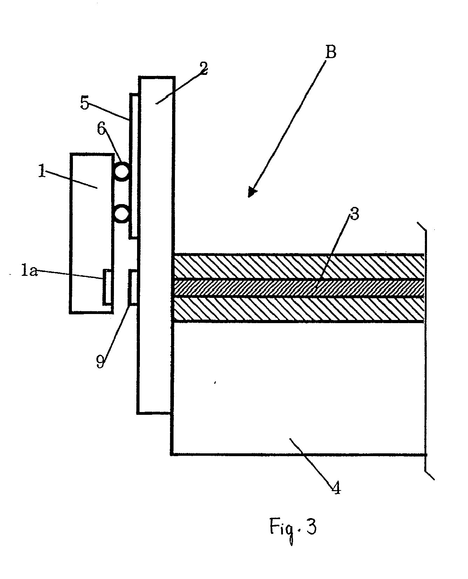

FIG. 3 is a view schematically showing the configuration of an optical module according to a second exemplary embodiment of the present invention.

As shown in FIG. 3, optical module B according to the second exemplary embodiment of the present invention is characterized in that optical filter part 9, that transmits light having a wavelength received by light receiving element 1 and that reflects light having other wavelengths, is formed in a region outside from a region where circuit pattern part 5 is formed, and on the surface on one side (left side in FIG. 3) of circuit board 2, by depositing a dielectric multilayer film and in that waveguide board 4 is connected to the surface on the other side (right side in FIG. 3) of circuit board 2.

An end portion of waveguide 3 of waveguide board 4 is optically connected to light receiving layer 1 a of light receiving element 1 through circuit board 2 and optical filter part 9.

The other points are the same as optical module A according to the first exemplary embodiment, and therefore, explanation of them will be omitted.

In optical module B according to the second exemplary embodiment of the present invention, the same operational effect as optical module A according to the above described first exemplary embodiment can also be obtained. Further, in optical module B according to the second exemplary embodiment of the present invention, optical filter part 9 and circuit pattern part 5 are provided by being deposited on the same surface on one side of circuit board 2. Therefore, manufacturing becomes easier, and further reduction in manufacturing cost can be achieved.

### [Third exemplary embodiment]

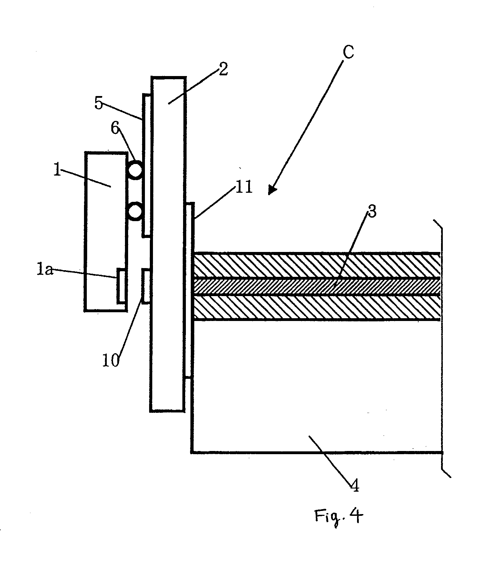

FIG. 4 is a view schematically showing the configuration of an optical module according to a third exemplary embodiment of the present invention.

As shown in FIG. 4, in optical module C according to the third exemplary embodiment of the present invention, first optical filter part 10, that transmits light having a wavelength received by light receiving element 1 and that reflects light having other wavelengths, is formed in a region outside from a region where circuit pattern part 5 is formed, and on the surface on one side (left side in FIG. 4) of circuit board 2 by depositing a dielectric multilayer film. Further, second optical filter part 11, that transmits light having a wavelength received by light receiving element 1 and that reflects light having other wavelengths, is formed on the surface on the other side (right side in FIG. 4) of circuit board 2 by depositing a dielectric multilayer film, and waveguide board 4 is connected to second optical filter part 11.

An end portion of waveguide 3 of waveguide board 4 is optically connected to light receiving layer 1a of light receiving element 1 through second optical filter part 11, circuit board 2 and first optical filter part 10.

The other configurations are the same as optical module A according to the first exemplary embodiment, and therefore, explanation of them will be omitted

In optical module C according to the third exemplary embodiment of the present invention, the same operational effect as optical module A according to the above described first exemplary embodiment can also be obtained. Further, in optical module C according to the third exemplary embodiment of the present invention, optical filter parts 10 and 11 are provided at two spots on both surfaces of circuit board 2, and therefore, isolation inhibiting the light having wavelengths other than the signal light can be increased. Further, by changing the filter characteristics of first optical filter part 10 and second optical filter part 11, the wavelength band region to be inhibited can be widened.

The present invention is not limited to the above described exemplary embodiments, and various changes can be made within the range of the technical matters described in Claims.

The present invention is used in an optical module of an optical communication system, for example.

While the invention has been particularly shown and described with reference to exemplary embodiments and examples thereof, the invention is not limited to these embodiments and examples. It will be understood by those of ordinary skilled in the art that various changes in the form and details may be made therein without departing from the spirit and scope of the present invention as defined by the claims.

## Claims

1. An optical module comprising a circuit board mounted with a light receiving element, and a waveguide board in which a waveguide is formed, wherein
said circuit board is made of a flexible material, and includes transmissivity for light having a wavelength received by said light receiving element,
a circuit pattern part is formed on a surface on one side of said circuit board, and said light receiving element is mounted on the circuit pattern part,
an optical filter part, that transmits the light having the wavelength received by said light receiving element and that reflects light having other wavelengths, is formed on a surface on the other side of said circuit board by depositing a dielectric multilayer film,
said waveguide board is connected to said optical filter part,
in said light receiving element, a light receiving layer is disposed at a position outside from a region where said circuit pattern part is formed, and
an end portion of said waveguide of said waveguide board is optically connected to the light receiving layer of said light receiving element through said optical filter part and said circuit board.

2. An optical module comprising a circuit board mounted with a light receiving element, and a waveguide board in which a waveguide is formed, wherein
said circuit board is made of a flexible material, and includes transmissivity for light having a wavelength received by said light receiving element,
a circuit pattern part is formed on a surface on one side of said circuit board, and said light receiving element is mounted on the circuit pattern part,
an optical filter part, that transmits the light having the wavelength received by said light receiving element and that reflects light having other wavelengths, is formed in a region outside from a region where said circuit pattern part is formed, and on a surface on the one side of said circuit board by depositing a dielectric multilayer film,
said waveguide board is connected to a surface on the other side of said circuit board,
in said light receiving element, a light receiving layer is disposed at a position outside from a region where said circuit pattern part is formed, and
an end portion of said waveguide of said waveguide board is optically connected to the light receiving layer of said light receiving element through said circuit board and optical filter part.

3. An optical module comprising a circuit board mounted with a light receiving element, and a waveguide board in which a waveguide is formed, wherein
said circuit board is made of a flexible material, and includes transmissivity for light having a wavelength received by said light receiving element,
a circuit pattern part is formed on a surface on one side of said circuit board, and said light receiving element is mounted on the circuit pattern part,
a first optical filter part, that transmits the light having the wavelength received by said light receiving element and that reflects light having other wavelengths, is formed in a region outside from a region where said circuit pattern part is formed, and on a surface on the one side of said circuit board by depositing a dielectric multilayer film,
a second optical filter part, that transmits the light having the wavelength received by said light receiving element and that reflects light having other wavelengths, is formed on a surface on the other side of said circuit board by depositing a dielectric multilayer film,
said waveguide board is connected to said second optical filter part,
in said light receiving element, a light receiving layer is disposed at a position outside from a region where said circuit pattern part is formed, and
an end portion of said waveguide of said waveguide board is optically connected to the light receiving layer of said light receiving element through said second optical filter part, said circuit board and first optical filter part.
